# EUROPÄISCHE PATENTSCHRIFT

(11) **EP 3 676 164 B1**
(45) Veröffentlichungstag und Bekanntmachung des Hinweises auf die Patenterteilung: **30.06.2021**
(21) Anmeldenummer: 18788884.7
(22) Anmeldetag: 28.08.2018
(51) Int. Cl.: B62K 19/30, B62K 19/32, B62K 21/12, B62J 11/13, B62J 11/19

(54) **HOHLZYLINDRISCHES BAUTEIL SOWIE VORBAU FÜR EIN FAHRRAD UND FAHRRAD**
HOLLOW CYLINDRICAL COMPONENT AND STEM FOR A BICYCLE, AND BICYCLE
ÉLÉMENT CYLINDRIQUE CREUX ET PARTIE AVANT POUR BICYCLETTE, ET BICYCLETTE

(30) Priorität: 29.08.2017 CH 10682017
(43) Veröffentlichungstag der Anmeldung: 08.07.2020
(73) Patentinhaber: myStromer AG, 3173 Oberwangen b. Bern (CH)
(72) Erfinder: ZBÄREN, Andreas, 3671 Herbligen (CH); BUCHS, Roger, 3213 Liebistorf (CH); EGLI, Peter, 3053 Münchenbuchsee (CH)
(74) Vertreter: IPrime Rentsch Kaelin AG
(86) Internationale Anmeldenummer: PCT/IB2018/056554
(87) Internationale Veröffentlichungsnummer: WO 2019/043575

(56) Entgegenhaltungen:
- EP-A2- 1 598 263
- EP-A2- 1 634 805
- DE-U1- 20 018 366
- FR-A1- 2 494 659

## Beschreibung

### Technisches Gebiet

Die vorliegende Erfindung bezieht sich auf das Gebiet der Fahrräder, welche elektrisch und/oder per Muskelkraft angetrieben sein können, und der elektrischen Motorräder, auch Pedelecs oder E-Bikes, im Folgenden der Einfachheit halber Fahrräder genannt. Sie betrifft ein hohlzylindrisches Bauteil für ein Fahrrad, mit einer den inneren Hohlraum des hohlzylindrischen Bauteils von der Umgebung des hohlzylindrischen Bauteils trennenden Zylinderwand, wobei das hohlzylindrische Bauteil mindestens eine sich wenigstens abschnittsweise entlang der Längsachse des hohlzylindrischen Bauteils erstreckende und zumindest teilweise in der Zylinderwand angeordnete Leitungsaufnahme aufweist, und wobei sich die mindestens eine Leitungsaufnahme durch eine Stirnfläche des hohlzylindrischen Bauteils hindurch erstreckt, wobei das hohlzylindrische Bauteil mehrere Leitungsaufnahmen aufweist, die im Bereich der Stirnfläche voneinander weg gekrümmt sind. Sie betrifft weiter einen Vorbau für ein Fahrrad, mit einem hohlzylindrischen Bauteil. Ferner betrifft sie ein Fahrrad.

### Technologischer Hintergrund

Fahrräder verwenden Leitungen, um Bediensignale von Bedienelementen weiterzuleiten, zum Beispiel an eine Schaltung, an eine Bremse und/oder an einen Antriebsmotor, sowie an dazugehörige elektronische Steuerungen und/oder an den Akkumulator des Elektrofahrrads. Diese Leitungen werden oftmals ausserhalb des Rahmens des Fahrrades verlegt, wobei sie nicht nur optisch störend wirken. Vielmehr kann sich auch der Fahrer des Fahrrades beziehungsweise dessen Kleidung oder Objekte entlang eines mit dem Fahrrad zurückzulegenden Weges in diesen Leitungen verfangen, wodurch die Unfallgefahr steigt. Darüber hinaus sind ausserhalb des Rahmens verlaufende Leitungen Witterungseinflüssen und mechanischen Einwirkungen relativ ungeschützt ausgesetzt, wodurch es zu Korrosion und Beschädigung der Leitungen kommen kann.

Um die Leitungen innerhalb des Rahmens des Fahrrades verlegen zu können, offenbart beispielsweise die WO 2015/180756 A1 einen Gabelschaft mit einer Ausnehmung, welche zwischen der Gabelschaftaufnahme des Fahrrades und dem Gabelschaft selbst Raum zum Verlegen einer Leitung bietet. Soll die Gabel des Fahrrades jedoch gegen eine andere Gabel ausgetauscht werden, so ist wieder eine Gabel mit dem speziell ausgeformte Gabelschaft zu verwenden. Die Möglichkeiten der individuellen Anpassung sowie der Reparatur des Fahrrades sind folglich eingeschränkt.

EP 1 598 263 A2, welche die Präambel des Anspruchs 1 zeigt, beschreibt eine Fahrrad-Vorbau-Struktur zum Verbergen der Verkabelung von im Lenkerbereich montierten Komponenten zu am Rest des Fahrrads montierten Komponenten. Die Fahrrad-Vorbau-Struktur umfasst im Wesentlichen ein Lenkerbefestigungselement und ein rohrförmiges Abstandselement. Das Lenkerbefestigungselement hat einen Verdrahtungsdurchgang, der sich zwischen dem Lenkerbefestigungsabschnitt und einem Gabelschaftbefestigungsabschnitt erstreckt. Das rohrförmige Abstandshalterelement hat einen Verdrahtungskanal, der sich zwischen dem ersten und dem zweiten Ende des rohrförmigen Abstandshalterelements erstreckt, und einen axialen Durchgang, der sich axial zwischen den oberen und unteren Endöffnungen des rohrförmigen Abstandshalterelements erstreckt.

DE 200 18 366 U1 beschreibt ein Fahrrad mit einem Rahmen, einer Schalt-Bremshebeleinheit, einer angetriebenen Einheit und einer Kabeleinheit, welche am Rahmen befestigt ist und welche die Schalt-Bremshebeleinheit und die angetriebene Einheit so miteinander verbindet, dass die Betätigung der Schalt-Bremshebeleinheit zu einem Vorgang der angetriebenen Einheit führt, wobei der Rahmen einen Rohrkörper aufweist, der zwei Öffnungen aufweist, um so die Erstreckung der Kabeleinheit innerhalb des Rohrkörpers durch die Öffnungen zu ermöglichen.

EP 1 634 805 A2 beschreibt einen Fahrrad-Vorbau mit einem Einstellelement und einem Befestigungselement. Eine Fahrradgabelsäule verläuft durch das Einstellelement und das Befestigungselement. Das Befestigungselement ist sicher an der Fahrradgabelsäule befestigt, indem Druck auf die äussere Umfangsseite der Fahrradgabelsäule ausgeübt wird.

### Darstellung der Erfindung

Es ist eine Aufgabe der Erfindung, ein hohlzylindrisches Bauteil für ein Fahrrad, einen Vorbau für ein Fahrrad und/oder ein Fahrrad bereitzustellen, wobei das Fahrrad einfach an individuelle Wünsche angepasst und repariert werden kann und zugleich hohen ästhetischen Ansprüchen genügt sowie Sicherheitsstandards entspricht.

Diese Aufgabe wird gelöst durch ein erfindungsgemässes hohlzylindrisches Bauteil, das mehrere Leitungsaufnahmen aufweist, die im Bereich der Stirnfläche voneinander weg gekrümmt sind.

Ferner wird diese Aufgabe durch einen erfindungsgemässen Vorbau für ein Fahrrad gelöst, wobei das hohlzylindrische Bauteil des Vorbaus das erfindungsgemässe hohlzylindrische Bauteil ist. Darüber hinaus wird die Aufgabe durch ein erfindungsgemässes Fahrrad gelöst, wobei das Fahrrad ein erfindungsgemässes hohlzylindrisches Bauteil und/oder einen erfindungsgemässen Vorbau aufweist.

Dadurch, dass die wenigstens eine Leitungsaufnahme in der Zylinderwand angeordnet ist, können Leitungen innerhalb des Bauteils verlegt werden, wobei beliebige und insbesondere standardisierte und in den inneren Hohlraum des hohlzylindrischen Bauteils eingreifende Elemente mit dem hohlzylindrischen Bauteil zusammen verwendet werden können. Das hohlzylindrische Bauteil ist zum Beispiel als eine Art Buchse beispielsweise in den Vorbau eines Fahrrads einsetzbar, um dort die Leitungsaufnahme bereitzustellen. Somit kann das hohlzylindrische Bauteil auch als Vorbaubuchse betrachtet werden, kann aber auch an anderen Orten, wie beispielsweise einem Tretlager, als Lagerbuchse dienen, um dort Leitungen verlegen zu können.

Damit in den inneren Hohlraum eingreifende Elemente, auch wenn sie sich durch eine Endöffnung des hohlzylindrischen Bauteils erstrecken, eine in der Leitungsaufnahme angeordnete Leitung mechanisch nicht oder nur wenig beeinträchtigen, erstreckt sich die zumindest eine Leitungsaufnahme durch die Stirnfläche des hohlzylindrischen Bauteils hindurch. Die Stirnfläche umgibt die Endöffnung beispielsweise quer zur Längsachse des hohlzylindrischen Bauteils. Folglich können sich die Leitung und das im inneren Hohlraum angeordnete Element entlang der Längsachse aus dem hohlzylindrischen Bauteil heraus erstrecken, ohne dass sich das Element und die Leitung mechanisch stören.

Die Lösung kann durch verschiedene, jeweils für sich vorteilhafte und, sofern nicht anders ausgeführt, beliebig miteinander kombinierbare Ausgestaltungen weiter verbessert werden. Auf diese Ausführungsformen und die mit ihnen verbundenen Vorteile ist im Folgenden eingegangen.

Gemäss einer ersten weiteren Ausführungsform ist die Leitungsaufnahme vom Aussenmantel des hohlzylindrischen Bauteils beabstandet ausgeformt. Äussere Einflüsse und beispielsweise Kollisionen des hohlzylindrischen Bauteils mit externen Elementen, etwa wenn das Fahrrad durch einen Wald fährt und Äste auf das hohlzylindrische Bauteil treffen, beeinflussen das hohlzylindrische Bauteil folglich wenig, da die Dicke der Zylinderwand aufgrund des Abstandes der Leitungsaufnahme zum Aussenmantel ohne weiteres einer Mindestdicke entsprechen und die mechanische Stabilität des hohlzylindrischen Bauteils somit auch im Bereich der Leitungsaufnahme wenig beeinträchtigt ist. Dennoch ist die Leitung in der Leitungsaufnahme durch die Zylinderwand vor den möglichen äusseren Einflüssen geschützt aufgenommen.

Gemäss einer Ausführungsform ist die Leitungsaufnahme quer zur Längsachse des hohlzylindrischen Bauteils vollständig vom Material der Zylinderwand umgeben, sodass eine in der Leitungsaufnahme angeordnete Leitung quer zur Längsachse allseitig gegen mechanische Einflüsse geschützt ist.

In einer weiteren Ausführungsform öffnet sich die Leitungsaufnahme mindestens abschnittsweise zum inneren Hohlraum des hohlzylindrischen Bauteils hin, sodass eine Leitung einfach in die Leitungsaufnahme eingesetzt werden kann. Die Leitungsaufnahme kann also zumindest abschnittsweise als eine sich zum inneren Hohlraum öffnende Nut ausgebildet sein, deren Längsachse sich entlang des Aussenmantels und/oder parallel zur Längsachse des hohlzylindrischen Bauteils erstreckt.

Gemäss einer ersten weiteren Ausführungsform ist die Leitungsaufnahme vom Innenmantel des hohlzylindrischen Bauteils beabstandet ausgeformt, sodass Leitungen einfach von aussen in die Leitungsaufnahme eingelegt werden können.

Um die Leitung im Bereich der Stirnfläche ohne Kanten, welche die Leitung im Betrieb beschädigen könnten, durch die Stirnfläche zu führen, krümmt sich die zumindest eine Leitungsaufnahme gemäss einer Ausführungsform im Bereich der Stirnfläche vom inneren Hohlraum und/oder von der Längsachse weg, oder zum inneren Hohlraum und/oder zur Längsachse hin.

Gemäss einer Ausführungsform weist das hohlzylindrische Bauteil mehrere Leitungsaufnahmen, die wenigstens abschnittsweise parallel zueinander versetzt angeordnet sind, auf. Hierdurch können mehrere Leitungen sicher und mit geringem mechanischen Aufwand in den Leitungsaufnahmen angeordnet werden.

Die Leitungsaufnahmen sind gemäss einer nicht beanspruchten Ausführungsform im Bereich der Stirnfläche aufeinander zu gekrümmt ausgeformt. Selbst wenn die Leitungen ausserhalb des hohlzylindrischen Bauteils ungeführt verlaufen sollten, geben die voneinander weg oder aufeinander zu gekrümmt ausgeformten Leitungsaufnahmen unterschiedliche und voneinander weg oder aufeinander zu weisende Richtungen vor, in denen sich die Leitungen ausserhalb des hohlzylindrischen Bauteils erstrecken, sodass sich die Leitungen kaum miteinander oder mit anderen Gegenständen, etwa weiteren Leitungen, verheddern können. Wenn das hohlzylindrische Bauteil das hohlzylindrische Bauteil des Vorbaus für ein Fahrrad ist, weist der Vorbau gemäss einer Ausführungsform eine Schaftaufnahme zur klemmenden beziehungsweise kraft- und/oder formschlüssigen Aufnahme eines Gabelschaftes auf. Das hohlzylindrische Bauteil bildet zumindest einen Abschnitt der Schaftaufnahme aus und der innere Hohlraum ist ausgebildet, zumindest einen Abschnitt des Gabelschaftes aufzunehmen. Gerade im Bereich des Lenkers des Fahrrades befinden sich viele Leitungen, welche sich vom Lenker bis in andere Bereiche des Fahrrades erstrecken. Ausgewählte oder alle dieser Leitungen können wenigstens abschnittsweise durch die zumindest eine Leitungsaufnahme oder durch die mehreren Leitungsaufnahmen verlaufen, um die Leitungen ordentlich angeordnet und vor Kollisionen geschützt zu führen.

Gemäss einer Ausführungsform ist die Schaftaufnahme ausgebildet, den Gabelschaft in einer Aufnahmerichtung aufzunehmen. Die zumindest eine Leitungsaufnahme erstreckt sich wenigstens abschnittsweise entlang der Aufnahmerichtung. Beispielsweise verlaufen die Längsachse und die Aufnahmerichtung parallel zueinander, sodass der Gabelschaft und die zumindest eine Leitung einfach entlang derselben Richtung in das hohlzylindrische Bauteil einsetzbar ausgestaltet sind.

Der Vorbau weist gemäss einer Ausführungsform einen Hohlraum für ein elektronisches Bauteil auf, wobei die wenigstens eine Leitungsaufnahme in den Hohlraum mündet. Elektrische oder optische oder sonstige zum elektronischen Bauteil hin verlaufende Signalleitungen sind folglich ohne weiteres mit dem elektronischen Bauteil verbindbar.

Der Vorbau weist gemäss einer Ausführungsform zwei Lenkerstutzen zur Verbindung mit Lenkergriffen für das Fahrrad auf. Zumindest einer der Lenkerstutzen ist mit einer wenigstens abschnittsweise innerhalb des Lenkerstutzens angeordneten Leitungsführung ausgebildet. Die Leitungsführung mündet in den Hohlraum. Da insbesondere im Bereich der Lenkergriffe oftmals Bedienelemente, beispielsweise Bremselemente, Schaltelemente oder andere Elemente zur Ansteuerung eines Antriebsmotors des Fahrrades, angeordnet sind, können von diesen Bedienelementen weg führende Signalleitungen innerhalb des Vorbaus geführt werden. Die Bedienelemente oder ausgewählte Bedienelemente können zum Beispiel als Bedienhebel, Bedienknöpfe, Bedienringe oder anders ausgeformt sein.

Um den Hohlraum möglichst klein ausgestalten und die Signalleitungen möglichst kurz halten zu können, ist der Hohlraum zumindest abschnittsweise zwischen der Mündung der zumindest eine Leitungsaufnahme und der Mündung der wenigstens einen Leitungsführung angeordnet.

Im Hohlraum ist gemäss einer Ausführungsform ein elektronisches Bauteil angeordnet, wobei das elektronische Bauteil eine Signalverteilungseinrichtung zur Verteilung von Steuersignalen eines zumindest teilweise elektrisch betreibbaren oder antreibbaren Fahrrades ist.

Das Fahrrad ist gemäss einem Ausführungsbeispiel ein zumindest teilweise elektrisch betreibbares oder anteibbares Fahrrad. Das Fahrrad kann also ein rein elektrisch, ein rein per Muskelkraft oder ein wahlweise elektrisch oder per Muskelkraft antreibbares Fahrrad sein. Ferner kann das Fahrrad als ein elektrisches Motorrad, auch Pedelec oder E-Bike bzw. Elektrofahrrad, ausgestaltet sein.

Gemäss einer Ausführungsform weist das Fahrrad einen Fahrradrahmen mit mindestens einem rohrförmigen Abschnitt auf, wobei das hohlzylindrisches Bauteil oder der Vorbau wenigstens teilweise im rohrförmigen Abschnitt angeordnet ist oder diesen ausbildet. Fahrradrahmen mit rohrförmigen Anschnitten sind weit verbreitet, sodass für den Einsatz des hohlzylindrischen Bauteils und/oder des Vorbaus speziell angepasste Fahrradrahmen nicht zwingend erforderlich sind.

Gemäss einer Ausführungsform wirkt der rohrförmige Abschnitt mit dem hohlzylindrischen Bauteil zusammenwirken, umfasst dieses oder besteht daraus. Der rohrförmige Abschnitt des Fahrrades ist zum Beispiel das Steuerrohr, das Oberrohr, das Unterrohr, das Sattelrohr, das obere Rohr des Hinterbaus oder das untere Rohr des Hinterbaus des Fahrradrahmens. Das hohlzylindrische Bauteil und/oder der Vorbau können also ohne weiteres eingesetzte beziehungsweise nachgerüstet werden oder in den Fahrradrahmen integriert sein.

Gemäss einer Ausführungsform wird das hohlzylindrische Bauteil als Buchsenelement oder Klemmbuchse, beispielsweise als Teil des Vorderbaus, vorteilhaft zur Kabelverlegung genutzt. Als Teil des Vorderbaus umschließt das hohlzylindrische Bauteil das Steuerohr oder ist vom Steuerrohr umschlossen beziehungsweise darin aufgenommen. Das hohlzylindrische Bauteil kann also ein anderes hohlzylindrisches Bauteil beziehungsweise der Vorbau kann also einen anderen Vorbau ohne weiteres ersetzen. Eine innere Form oder Kontur des hohlzylindrischen Bauteils kann einer äusseren Form oder Kontur des Gabelschaftes entsprechen. Eine äussere Form oder Kontur des Vorbaus kann einer äusseren Form oder Kontur des Steuerrohrs entsprechen.

Gemäss einer Ausführungsform ist das hohlzylindrische Bauteil bewegungsübertragend mit einer Fahrradgabel für das Fahrrad und beispielsweise klemmend mit einem Gabelschaft der Fahrradgabel verbunden, wobei der Gabelschaft zum Beispiels wenigstens abschnittsweise durch das hohlzylindrische Bauteil verlaufend von diesem klemmend bzw. form- und/oder kraftschlüssig gehalten ist. Das hohlzylindrische Bauteil kann also zur Übertragung einer Lenkkraft bzw. eines Lenkmoments zum Lenken des Fahrrades verwendet werden, wobei Leitungen und zum Beispiel zum Vorderrad des Fahrrades führende Bremsleitungen durch die Leitungsaufnahmen auch dann unsichtbar geführt und/oder geschützt sind, wenn das hohlzylindrische Bauteil relativ zu anderen Elementen des Fahrradrahmens und beispielsweise zum rohrförmigen Abschnitt, in dem das hohlzylindrische Bauteil angeordnet sein kann, bewegt wird.

Gemäss einer Ausführungsform weist das hohlzylindrische Bauteil einen Schlitz auf, der sich auf einer Seite der Längsachse des hohlzylindrischen Bauteils durch dessen Zylinderwand erstreckt. Der Schlitz verläuft parallel oder schräg zur Längsachse. Beispielsweise bildet das hohlzylindrische Bauteil zumindest einen Abschnitt einer Schaftaufnahme aus. Die Schaftaufnahme ist zur klemmenden Aufnahme eines Schaftes, insbesondere ein Gabelschaft oder ein Sattelschaft oder als weitere Alternative als eine Kurbel- oder sonstige Antriebswelle, ausgeformt. Der innere Hohlraum kann zur zumindest abschnittsweisen in Aufnahme des Schaftes ausgebildet sein. Zumindest der die Schaftaufnahme ausbildende Teil des hohlzylindrischen Bauteils kann im rohrförmigen Abschnitt bewegbar gehalten sein.

In jeder der vorherigen Ausführungsformen können das hohlzylindrische Bauteil, der Vorbau und/oder das Fahrrad zumindest eine, zwei, drei, fünf oder bis zu 10, also mehrere oder beliebig viele Leitungsaufnahmen aufweisen, von denen wenigstens einige zumindest teilweise innerhalb der Zylinderwand angeordnet sind und sich optional mindestens abschnittsweise zum inneren Hohlraum hin öffnen. Es ist also möglich, jeweils nur eine Leitung in einer Leitungsaufnahme anzuordnen, sodass die Leitungen einfach verlegbar sind.

Die Leitungen sind vorzugsweise Signalleitungen, welche Steuersignale führen. Die Signalleitungen können mechanische Signalleitungen, etwa Bowdenzüge, hydraulische oder pneumatische Signalleitungen, oder elektrische Signalleitungen beziehungsweise optische Signalleitungen sein.

Im Rahmen dieser Offenbarung ist ein Zylinder ein Körper mit einer beliebig geformten Grundfläche. Eine Verschiebung dieser Grundfläche entlang der Längsachse des Zylinders ergibt den Körper. Die Längsachse kann senkrecht oder unter einem Winkel, der grösser oder kleiner als 90° ist, zur Grundfläche ausgerichtet sein. Insbesondere kann die Grundfläche im Wesentlichen polygonal, oval oder ringförmig ausgeformt sein. Der Zylinder weist einen Aussenmantel auf, der von der Längsachse weg gerichtet ist. Ist der Zylinder als ein Hohlzylinder ausgebildet, weist der Zylinder einen Innenmantel auf, der an den inneren Hohlraum des Zylinders angrenzt und auf die Längsachse zu weisen kann.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands. Merkmale dieser Ausführungsbeispiele sind unabhängig voneinander kombinierbar.

In den Figuren und der dazugehörigen Beschreibung sind gleiche oder gleichwirkende Teile mit den gleichen Bezugszeichen versehen.
- Figur 1: zeigt schematisch ein erstes mögliches Ausführungsbeispiel eines erfindungsgemässen hohlzylindrischen Bauteils in einer Querschnittsdarstellung,
- Figur 2: zeigt eine schematische Querschnittsdarstellung eines weiteren möglichen Ausführungsbeispiels eines erfindungsgemässen hohlzylindrischen Bauteils,
- Figur 3: zeigt schematisch noch ein weiteres mögliches Ausführungsbeispiel eines erfindungsgemässen hohlzylindrischen Bauteils in einer Querschnittsdarstellung,
- Figur 4: zeigt eine schematische Querschnittsdarstellung noch eines weiteren möglichen Ausführungsbeispiels des erfindungsgemässen hohlzylindrischen Bauteils,
- Figur 5: zeigt schematisch ein erstes mögliches Ausführungsbeispiel eines erfindungsgemässen hohlzylindrischen Bauteils in einer Querschnittsdarstellung,
- Figur 6: zeigt eine schematische Querschnittsdarstellung eines weiteren möglichen Ausführungsbeispiels eines erfindungsgemässen hohlzylindrischen Bauteils,
- Figur 7: zeigt schematisch noch ein weiteres mögliches Ausführungsbeispiel eines erfindungsgemässen hohlzylindrischen Bauteils in einer Querschnittsdarstellung,
- Figur 8: zeigt eine schematische Querschnittsdarstellung noch eines weiteren möglichen Ausführungsbeispiels des erfindungsgemässen hohlzylindrischen Bauteils,
- Figur 9: zeigt eine schematische Perspektivansicht eines möglichen Ausführungsbeispiels eines erfindungsgemässen Vorbaus für ein Fahrrad,
- Figur 10: zeigt eine schematische Schnittdarstellung des Ausführungsbeispiels der Figur 5, und
- Figur 11: zeigt eine schematische Ansicht eines erfindungsgemässen Fahrrades.

### Wege zur Ausführung der Erfindung

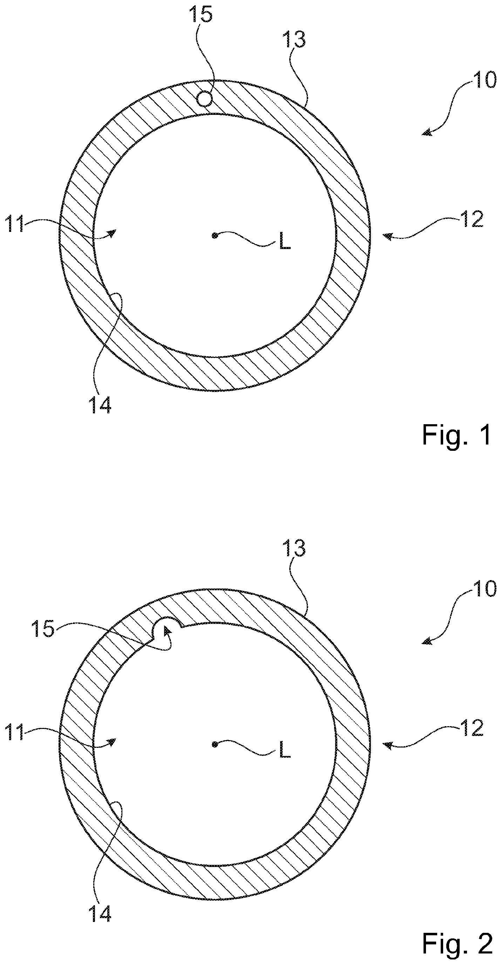

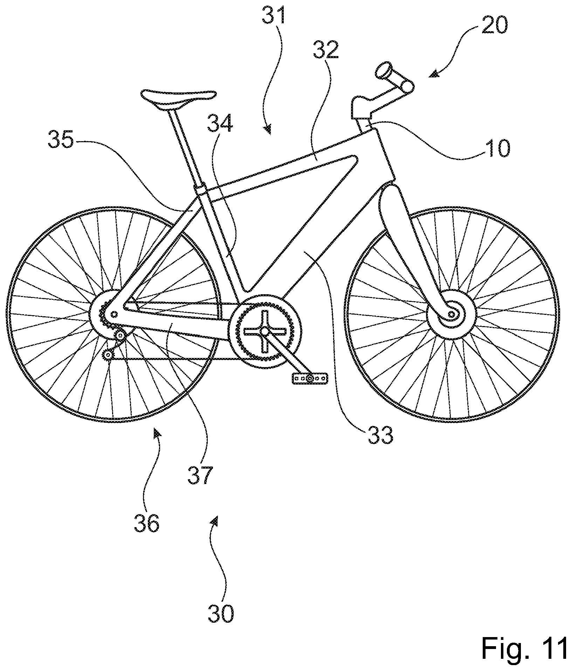

Ein erstes mögliches Ausführungsbeispiel eines erfindungsgemässen hohlzylindrischen Bauteils 10 für ein Fahrrad (siehe Figur 11) ist in der Figur 1 dargestellt. Das hohlzylindrische Bauteil 10 weist einen inneren Hohlraum 11 auf, der quer zu einer Längsachse L des hohlzylindrischen Bauteils 10 zumindest abschnittsweise von einer Zylinderwand 12 umgeben ist. Die Zylinderwand 12 weist einen Aussenmantel 13 auf, der von der Längsachse L abgewandt ist. Ferner weist die Zylinderwand 12 ein Innenmantel 14 auf, der der Längsachse L zugewandt ist.

Zwischen dem Aussenmantel 13 und dem Innenmantel 14 ist das hohlzylindrische Bauteil 10 mit einer Leitungsaufnahme 15 versehen, die zumindest vom Aussenmantel 13 und im Ausführungsbeispiel der Figur 1 auch vom Innenmantel 14 beanstandet angeordnet ist. Die Leitungsaufnahme 15 ist also innerhalb der Zylinderwand 12 angeordnet. Die Leitungsaufnahme 15 ist folglich sowohl durch den Aussenmantel 13 als auch durch den Innenmantel 14 vor mechanischen Beeinträchtigungen geschützt. Die Leitungsaufnahme 15 erstreckt sich wenigstens abschnittsweise parallel zur Längsachse L.

Figur 2 zeigt ein weiteres mögliches Ausführungsbeispiel des erfindungsgemässen hohlzylindrischen Bauteils 10. Der Kürze halber ist im Folgenden lediglich auf die Unterschiede zum Ausführungsbeispiel der Figur 1 eingegangen. Die Leitungsaufnahme 15 des hohlzylindrischen Bauteils 10 des in der Figur 2 dargestellten Ausführungsbeispiels ist wiederum beanstandet vom Aussenmantel 13 angeordnet. Allerdings durchbricht die Leitungsaufnahme 15 des Ausführungsbeispiels der Figur 2 zumindest abschnittsweise den Innenmantel 14, sodass sich die Leitungsaufnahme 15 mindestens abschnittsweise zum inneren Hohlraum 11 beziehungsweise zur Längsachse L hin öffnet. Folglich kann eine Leitung quer zur Längsachse L einfach in die Leitungsaufnahme 15 eingesetzt werden, die sich wie eine Art Nut entlang des Aussenmantels 13 erstreckt.

Ein durch die Zylinderwand 12 ausgeformter Rand der Leitungsaufnahme 15 kann eine runde oder polygonale Grundfläche in der Grundfläche des hohlzylindrischen Bauteils 10 aufweisen. In einer Ebene quer zur Längsachse L kann sich der Rand über wenigstens 90° und beispielsweise bis zu 135°, bis zu 180° oder sogar bis zu 215° um einen Mittelpunkt der runden oder polygonalen Grundfläche der Leitungsaufnahme 15 erstrecken. Erstreckt sich der Rand über weniger als 180°, so kann eine Leitung einfach in die Leitungsaufnahme 15 eingesetzt werden. Erstreckt sich der Rand über mehr als 180°, so kann die Leitung mit einem zum Querschnitt der Leitungsaufnahme 15 im Wesentlichen komplementären Querschnitt formschlüssig oder kraftschlüssig in der Leitungsaufnahme 15 gehalten sein.

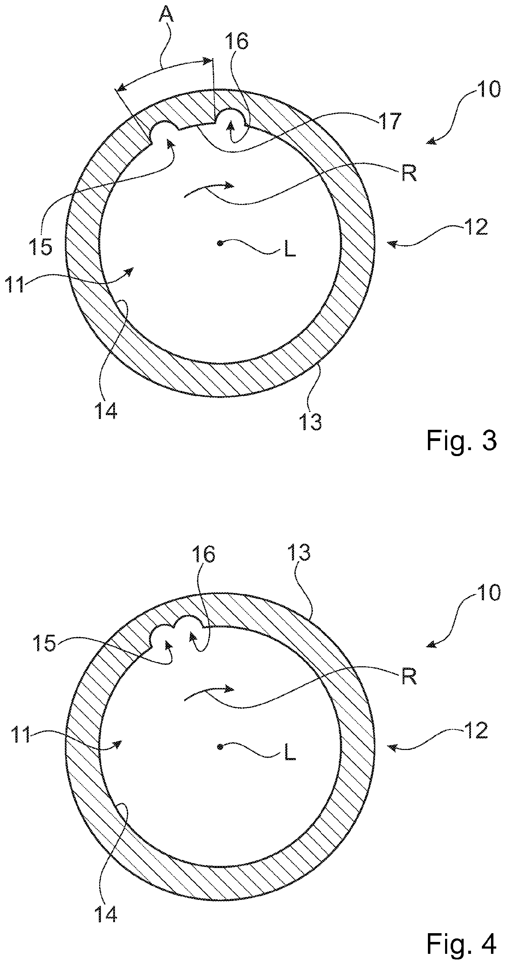

Figur 3 zeigt ein weiteres mögliches Ausführungsbeispiel des erfindungsgemässen hohlzylindrischen Bauteils 10. Der Kürze halber ist im Folgenden lediglich auf die Unterschiede zum Ausführungsbeispiel der Figur 2 eingegangen. Zusätzlich zur Leitungsaufnahme 15 weist das hohlzylindrische Bauteil 10 des Ausführungsbeispiels der Figur 3 eine weitere Leitungsaufnahme 16 auf. In einer um die Längsachse L herum verlaufenden radialen Richtung R sind die Leitungsaufnahmen 15, 16 beanstandet zueinander angeordnet. Der Innenmantel 14 ist also auch zwischen den Leitungsaufnahmen 15, 16 vorhanden und bildet einen Verbindungssteg 17 zwischen den Leitungsaufnahmen 15, 16. Ausgehend von der Längsachse L und in der radialen Richtung R kann der Abstand A der Leitungsaufnahmen 15,16 zueinander wenigstens 5°, bis zu 10°, bis zu 45°, bis zu 90°, bis zu 135° oder sogar bis zu 180° betragen. Die Leitungsaufnahmen 15, 16 sind insbesondere parallel zueinander versetzt entlang des Innenmantels 14 verlaufend angeordnet.

Figur 4 zeigt ein weiteres mögliches Ausführungsbeispiel des erfindungsgemässen hohlzylindrischen Bauteils 10. Der Kürze halber ist im Folgenden lediglich auf die Unterschiede zum Ausführungsbeispiel der Figur 3 angegangen. In der radialer Richtung R überlappen sich die Leitungsaufnahmen 15, 16 des hohlzylindrischen Bauteils 10 des Ausführungsbeispiels der Figur 4 zumindest teilweise.

Der durch die Zylinderwand 12 ausgeformte Rand jeder der Leitungsaufnahmen 15, 16 kann eine runde oder polygonale Grundfläche in der Grundfläche des hohlzylindrischen Bauteils 10 aufweisen. In einer Ebene quer zur Längsachse L kann sich der Rand über einen kleineren Winkel als der Rand des Ausführungsbeispiels der Figur 3 erstrecken. Insbesondere kann der Rand zwischen den Leitungsaufnahmen 15, 16 vor dem Erreichen des durch die Leitungsaufnahme 15, 16 entfernten Abschnitts des Innenmantels 14 enden. Der Abstand der Mittelpunkte der Leitungsaufnahmen 15, 16 zueinander entlang der radialen Richtung R ist vorzugsweise kleiner, als der Durchmesser der Leitungsaufnahmen 15, 16 entlang der radialen Richtung R, wenn sich diese nicht überlappen würden.

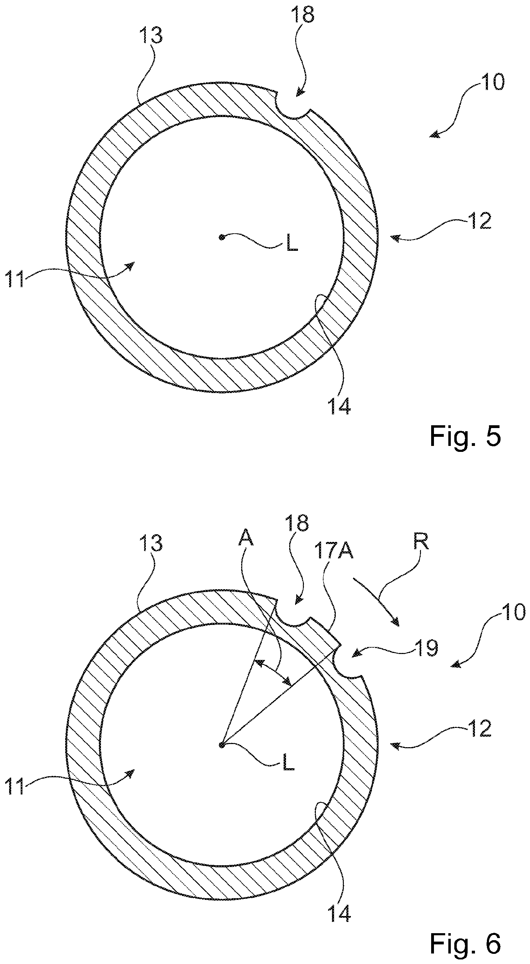

Figur 5 zeigt ein weiteres mögliches Ausführungsbeispiel des erfindungsgemässen hohlzylindrischen Bauteils 10. Der Kürze halber ist im Folgenden lediglich auf die Unterschiede zu den bisherigen Ausführungsbeispielen eingegangen. Das hohlzylindrischen Bauteils 10 des in der Figur 5 dargestellten Ausführungsbeispiels weist eine Leitungsaufnahme 18 auf, die beanstandet vom Innenmantel 14 angeordnet ist. Die Leitungsaufnahme 18 des Ausführungsbeispiels der Figur 5 durchbricht den Aussenmantel 13 zumindest abschnittsweise, sodass sich die Leitungsaufnahme 18 mindestens abschnittsweise vom inneren Hohlraum 11 beziehungsweise von der Längsachse L weg öffnet. Folglich kann eine Leitung quer zur Längsachse L einfach in die Leitungsaufnahme 18 eingesetzt werden, die sich wie eine Art Nut entlang des Innenmantels 14 erstreckt.

Ein durch die Zylinderwand 12 ausgeformter Rand der Leitungsaufnahme 18 kann eine runde oder polygonale Grundfläche in der Grundfläche des hohlzylindrischen Bauteils 10 aufweisen. In einer Ebene quer zur Längsachse L kann sich der Rand über wenigstens 90° und beispielsweise bis zu 135°, bis zu 180° oder sogar bis zu 215° um einen Mittelpunkt der runden oder polygonalen Grundfläche der Leitungsaufnahme 18 erstrecken. Erstreckt sich der Rand über weniger als 180°, so kann eine Leitung einfach in die Leitungsaufnahme 18 eingesetzt werden. Erstreckt sich der Rand über mehr als 180°, so kann die Leitung mit einem zum Querschnitt der Leitungsaufnahme 18 im Wesentlichen komplementären Querschnitt formschlüssig oder kraftschlüssig in der Leitungsaufnahme 18 gehalten sein.

Figur 6 zeigt ein weiteres mögliches Ausführungsbeispiel des erfindungsgemässen hohlzylindrischen Bauteils 10. Der Kürze halber ist im Folgenden lediglich auf die Unterschiede zum Ausführungsbeispiel der Figur 5 eingegangen. Zusätzlich zur Leitungsaufnahme 18 weist das hohlzylindrische Bauteil 10 des Ausführungsbeispiels der Figur 6 eine weitere Leitungsaufnahme 19 auf. In einer um die Längsachse L herum verlaufenden radialen Richtung R sind die Leitungsaufnahmen 18, 19 beanstandet zueinander angeordnet. Der Aussenmantel 13 ist also auch zwischen den Leitungsaufnahmen 18, 19 vorhanden und bildet einen Verbindungssteg 17A zwischen den Leitungsaufnahmen 18, 19. Ausgehend von der Längsachse L und in der radialen Richtung R kann der Abstand A der Leitungsaufnahmen 18,19 zueinander wenigstens 5°, bis zu 10°, bis zu 45°, bis zu 90°, bis zu 135° oder sogar bis zu 180° betragen. Die Leitungsaufnahmen 18, 19 sind insbesondere parallel zueinander versetzt entlang des Innenmantels 14 verlaufend angeordnet.

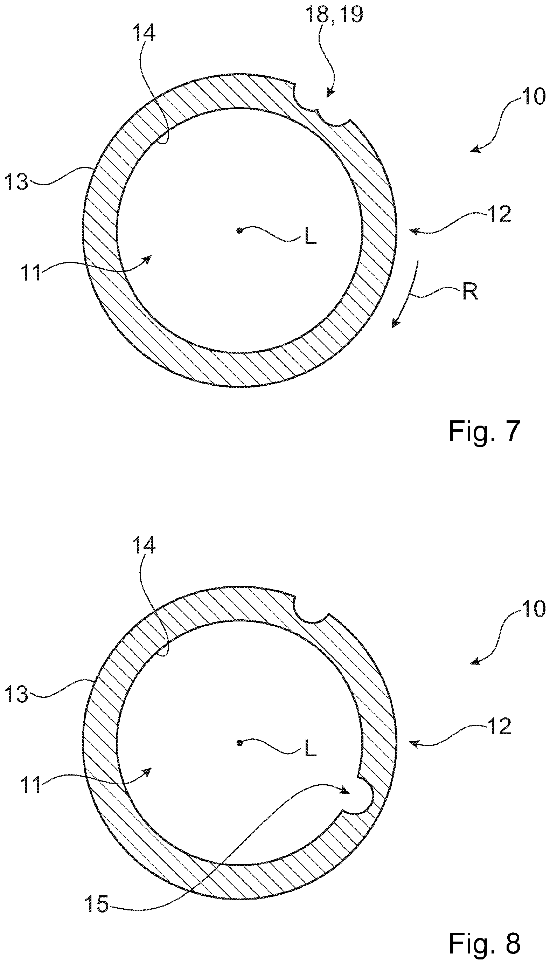

Figur 7 zeigt ein weiteres mögliches Ausführungsbeispiel des erfindungsgemässen hohlzylindrischen Bauteils 10. Der Kürze halber ist im Folgenden lediglich auf die Unterschiede zum Ausführungsbeispiel der Figur 6 angegangen. In der radialer Richtung R überlappen sich die Leitungsaufnahmen 18, 19 des hohlzylindrischen Bauteils 10 des Ausführungsbeispiels der Figur 7 zumindest teilweise.

Der durch die Zylinderwand 12 ausgeformte Rand jeder der Leitungsaufnahmen 18, 19 kann eine runde oder polygonale Grundfläche in der Grundfläche des hohlzylindrischen Bauteils 10 aufweisen. In einer Ebene quer zur Längsachse L kann sich der Rand über einen kleineren Winkel als der Rand des Ausführungsbeispiels der Figur 7 erstrecken. Insbesondere kann der Rand zwischen den Leitungsaufnahmen 18, 19 vor dem Erreichen des durch die Leitungsaufnahme 18, 19 entfernten Abschnitts des Aussenmantels 13 enden. Der Abstand der Mittelpunkte der Leitungsaufnahmen 15, 16 zueinander entlang der radialen Richtung R ist vorzugsweise kleiner, als der Durchmesser der Leitungsaufnahmen 18, 19 entlang der radialen Richtung R, wenn sich diese nicht überlappen würden.

Figur 8 zeigt ein weiteres mögliches Ausführungsbeispiel des erfindungsgemässen hohlzylindrischen Bauteils 10. Der Kürze halber ist im Folgenden lediglich auf die Unterschiede zu den bisherigen Ausführungsbeispielen eingegangen. Das hohlzylindrischen Bauteils 10 des in der Figur 8 dargestellten Ausführungsbeispiels weist zumindest eine Leitungsaufnahme 15 und wenigstens eine Leitungsaufnahme 18 auf. Weist das hohlzylindrische Bauteil 10 mehr als eine sich zur Längsachse L hin öffnende Leitungsaufnahme auf, so können diese Leitungsaufnahmen 15, 16 wie in mindestens einem der Ausführungsbeispiele der Figuren 3 und 4 ausgeformt sein. Weist das hohlzylindrische Bauteil 10 alternativ oder zusätzlich mehr als eine sich zur Längsachse L hin öffnende Leitungsaufnahme auf, so können diese Leitungsaufnahmen 18, 19 wie in mindestens einem der Ausführungsbeispiele der Figuren 6 und 7 ausgeformt sein.

Optional kann das hohlzylindrische Bauteil 10 jedes der Ausführungsbeispiele der Figuren 2 bis 8 zusätzlich auch die Leitungsaufnahme 15 des Ausführungsbeispiels der Figur 1 aufweisen.

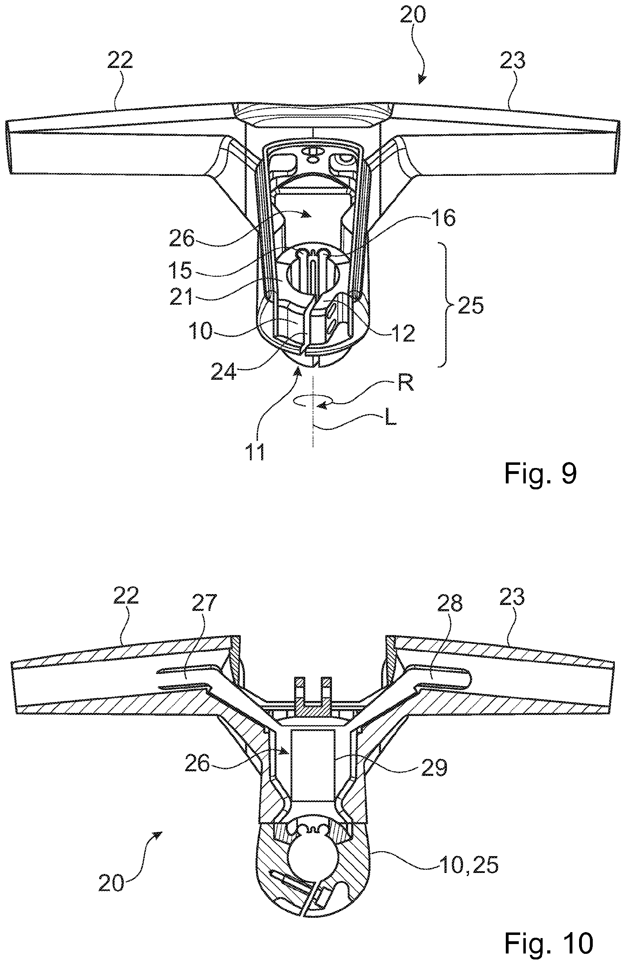

Figur 9 zeigt ein erstes Ausführungsbeispiel eines erfindungsgemässen Vorbaus 20 für ein Fahrrad, mit dem hohlzylindrischen Bauteil 10. Das hohlzylindrische Bauteil 10 entspricht im Wesentlichen dem hohlzylindrischen Bauteil 10 des Ausführungsbeispiels der Figur 3. Alternativ kann der Vorbau 20 mit den hohlzylindrischen Bauteilen 10 der anderen Ausführungsbeispiele ausgeformt sein.

In Figur 9 ist der erfindungsgemässe Vorbau 20 in einer schematischen Perspektivdarstellung gezeigt. Das hohlzylindrische Bauteil 10 ist lediglich beispielhaft als Bestandteil des Vorbaus 20 gezeigt. Alternativ oder zusätzlich können andere Teile des Fahrrades und insbesondere des Fahrradrahmens mit dem hohlzylindrischen Bauteil 10 zusammenwirken, dieses umfassen oder daraus bestehen. Diese Teile des Fahrrades können ein rohrförmiger Abschnitt des Fahrradrahmens und zum Beispiel das Steuerrohr, das Oberrohr, das Unterrohr, das Sattelrohr, das obere Rohr des Hinterbaus oder das untere Rohr des Hinterbaus des Fahrradrahmens sein. Insbesondere kann das hohlzylindrische Bauteil 10 als Buchsenelement oder Klemmbuchse im Vorderbau 20 vorteilhaft zur Kabelverlegung genutzt werden, wo das hohlzylindrische Bauteil 10 das Steuerohr umschliesst oder vom Steuerrohr umschlossen beziehungsweise aufgenommen ist.

Ein Ende des hohlzylindrischen Bauteils 10 ist mit einer Stirnfläche 21 ausgebildet, die sich quer zur Längsachse L erstreckt. Das hohlzylindrische Bauteil 10 kann die Stirnfläche 21 auch dann aufweisen, wenn es nicht Teil des Vorbaus 20 ist. Die Stirnfläche 21 kann die Längsachse L zumindest teilweise umlaufen. Die Leitungsaufnahmen 15, 16 erstrecken sich beispielsweise entlang der Längsachse L durch die Stirnfläche 21 hindurch.

Im Bereich der Stirnfläche 21 krümmen sich die Leitungsaufnahmen 15, 16 vom inneren Hohlraum 11 weg. Im Bereich der Stirnfläche 21 kann dabei bedeuten, dass sich der Bereich entlang der Längsachse L von der Stirnfläche 21 in das hohlzylindrische Bauteil 10 bis zu einer Tiefe erstreckt, die zumindest dem Durchmesser der jeweiligen Leitungsaufnahme 15, 16 quer zur Längsachse L entspricht. Der Durchmesser ist der Durchmesser eines nicht von der Längsachse L weg gekrümmten Abschnitts der jeweiligen Leitungsaufnahme 15, 16.

Weist das hohlzylindrische Bauteil 10 zusätzlich oder alternativ mindestens eine sich von der Längsachse L weg öffnende Leitungsaufnahme 18, 19 auf, so kann sich diese Leitungsaufnahme 18, 19 im Bereich der Stirnfläche 21 in Richtung auf den inneren Hohlraum 11 beziehungsweise in Richtung auf die Längsachse L hin krümmen. Im Bereich der Stirnfläche 21 kann dabei bedeuten, dass sich der Bereich entlang der Längsachse L von der Stirnfläche 21 in das hohlzylindrische Bauteil 10 bis zu einer Tiefe erstreckt, die zumindest dem Durchmesser der jeweiligen Leitungsaufnahme 18, 19 quer zur Längsachse L entspricht. Der Durchmesser ist der Durchmesser eines nicht von der Längsachse L weg gekrümmten Abschnitts der jeweiligen Leitungsaufnahme 18, 19.

Auch wenn das hohlzylindrische Bauteil 10 nur eine einzelne Leitungsaufnahme 15 aufweist, kann diese im Bereich der Stirnfläche 21 von der Längsachse L weg gekrümmt ausgebildet sein. Weist das hohlzylindrische Bauteil 10 jedoch mehrere und insbesondere zwei Leitungsaufnahmen 15, 16 auf, so können diese wie im Ausführungsbeispiel der Figur 9 dargestellt im Bereich der Stirnfläche 21 voneinander weg gekrümmt sein.

Selbst wenn das hohlzylindrische Bauteil 10 zusätzlich oder alternativ nur eine einzelne Leitungsaufnahme 18 aufweist, kann diese im Bereich der Stirnfläche 21 auf die Längsachse L zu gekrümmt ausgebildet sein. Weist das hohlzylindrische Bauteil 10 zusätzlich oder alternativ jedoch mehrere und insbesondere zwei Leitungsaufnahmen 18, 19 auf, so können diese im Bereich der Stirnfläche 21 aufeinander zu gekrümmt sein.

Ist das hohlzylindrische Bauteil 10 Teil des Vorbaus 20 und weist der Vorbau 20 Lenkerstutzen 22, 23 zur Verbindung des Vorbaus 20 mit Lenkergriffen für das Fahrrad auf, so können die Leitungsaufnahme 15, 16 im Bereich der Stirnfläche 21 jeweils in Richtung auf einen der Lenkerstutzen 22,23 verlaufen.

Im Ausführungsbeispiel der Figur 9 weist das hohlzylindrische Bauteil 10 einen Schlitz 24 auf, der sich auf einer Seite der Längsachse L durch die Zylinderwand 12 erstreckt. Der Schlitz 24 kann parallel zur Längsachse L oder schräg zur Längsachse L verlaufen. Das hohlzylindrische Bauteil 10 kann also zumindest einen Abschnitt einer Schaftaufnahme 25 ausbilden. Die Schaftaufnahme 25 ist zur klemmenden Aufnahme eines Schaftes, insbesondere ein Gabelschaft oder ein Sattelschaft oder als weitere Alternative als eine Kurbel- oder sonstige Antriebswelle, ausgeformt. Der innere Hohlraum 11 kann zur zumindest abschnittsweisen in Aufnahme des Schaftes ausgebildet sein.

Beispielsweise kann der Schaft in einer entlang der Längsachse L verlaufenden Aufnahmerichtung in den inneren Hohlraum 11 eingesetzt werden. Entlang der radialen Richtung R kann der Schlitz 24 zusammengedrückt werden, um den Schaft klemmend im hohlzylindrischen Bauteil 10 zu halten.

Aus Sicht der Längsachse L hinter den Leitungsaufnahmen 15, 16 weist der Vorbau 20 des Ausführungsbeispiels der Figur 9 einen Hohlraum 26 auf. Der Hohlraum 26 kann zur Aufnahme eines elektronischen Bauteils dienen. Die wenigstens eine Leitungsaufnahme 15 beziehungsweise die beiden im Ausführungsbeispiel der Figur 9 dargestellten Leitungsaufnahmen 15, 16 münden in diesem Hohlraum 26.

Figur10 zeigt das Ausführungsbeispiel der Figur 9 in einer schematischen Schnittansicht, wobei die Schnittebene im Wesentlichen quer zur Längsachse L verläuft. Der Vorbau 20 ist mit dem hohlzylindrischen Bauteil 10, welches als Schaftaufnahme 25 ausgebildet ist, und den beiden an der Schaftaufnahme 25 angebrachten Lenkerstutzen 22, 23 gezeigt. Zumindest einer der Lenkerstutzen 22, 23 und insbesondere beide Lenkerstutzen 22, 23 sind jeweils mit zumindest einer wenigstens abschnittsweise innerhalb des jeweiligen Lenkerstutzens 22, 23 angeordneten Leitungsführung 27, 28 ausgebildet. Die zumindest eine Leitungsführung 27, 28 ist ausgebildet, um Leitungen aufzunehmen und in Richtung auf die Leitungsaufnahmen 15, 16 beziehungsweise in den Hohlraum 26 hin zu leiten. Beispielsweise münden die Leitungsführungen 27, 28 in den Hohlraum 26. Die Mündungen der Leitungsaufnahmen 15, 16 können jeweils in Richtung auf wenigstens eine der Leitungsführung 27, 28 und insbesondere in der Richtung auf deren Mündungen in den Hohlraum 26 hin gekrümmt sein.

Der Hohlraum 26 ist vorzugsweise zumindest abschnittsweise zwischen der Mündung der zumindest einen Leitungsaufnahme 15 oder der Mündungen der beiden Leitungsaufnahmen 15, 16 und der Mündung der zumindest einen Leitungsführung 27 beziehungsweise der Mündungen der Leitungsführung 27, 28 angeordnet. Im Hohlraum 26 kann ein elektronisches Bauteil 29 angeordnet sein.

Das elektronische Bauteil 29 kann dazu ausgestaltet sein, durch die Leitungsführung 27 beziehungsweise durch die Leitungsführung 27, 28 in den Hohlraum 26 geführte Leitungen signalübertragend mit einer in der zumindest einen Leitungsaufnahme 15 aufgenommenen Leitung beziehungsweise mit in den Leitungsaufnahmen 15, 16 aufgenommenen Leitungen zu verbinden. Insbesondere kann das elektronische Bauteil 29 eine Signalverteilungseinrichtung zur Verteilung von Steuersignalen sein. Dabei kann das elektronische Bauteil 29 die Steuersignale vor der Weiterleitung verarbeiten. Alternativ kann das elektronische Bauteil 29 Steuersignalen mehrerer Leitungen zusammengefasst an eine einzelne Leitung oder verteilt an unterschiedliche Leitungen weiterleiten.

Figur 11 zeigt eine schematische Ansicht eines Fahrrades 30, mit einem hohlzylindrischen Bauteil 10 als Teil des Vorbaus 20 des Fahrrades 30. Alternativ oder zusätzlich kann zumindest ein Bestandteil des Fahrradrahmens 31, etwa dessen Oberrrohr 32, dessen Unterrohr 33, dessen Sattelrohr 34, das obere Rohr 35 von dessen Hinterbau 36 oder das untere Rohr 37 von dessen Hinterbau 36 das hohlzylindrische Bauteil 10 aufweisen oder zumindest abschnittsweise oder sogar vollständig daraus bestehen. Das Fahrrad 30 kann ein rein elektrisch, ein rein per Muskelkraft oder ein wahlweise elektrisch oder per Muskelkraft antreibbares Fahrrad sein. Ferner kann das Fahrrad 30 ein elektrisches Motorrad, auch Pedelec oder E-Bike, sein.

In jedem der vorherigen Ausführungsbeispiele können das hohlzylindrische Bauteil 10, der Vorbau 20 und/oder das Fahrrad 30 zumindest eine, zwei, drei, fünf oder bis zu 10, also mehrere oder beliebig viele Leitungsaufnahmen aufweisen, von denen wenigstens einige zumindest teilweise innerhalb der Zylinderwand angeordnet sind.

### Bezugszeichenliste

- 10: hohlzylindrisches Bauteil
- 11: innerer Hohlraum
- 12: Zylinderwand
- 13: Außenmantel
- 14: Innenmantel
- 15, 16: Leitungsaufnahme
- 17: Steg
- 20: Vorbau
- 21: Stirnfläche
- 22, 23: Lenkerstutzen
- 24: Schlitz
- 25: Schaftaufnahme
- 26: Hohlraum
- 27, 28: Leitungsführung
- 29: elektronisches Bauteil
- 30: Fahrrad
- 31: Fahrradrahmen
- 32: Oberrohr
- 33: Unterrohr
- 34: Sattelrohr
- 35: oberes Rohr
- 36: Hinterbau
- 37: unteres Rohr

- A: Abstand
- L: Längsachse
- R: radiale Richtung

## Patentansprüche

1. Hohlzylindrisches Bauteil (10) für ein Fahrrad (30), mit einer den inneren Hohlraum (11) des hohlzylindrischen Bauteils (10) von der Umgebung des hohlzylindrischen Bauteils (10) trennenden Zylinderwand (12), wobei
das hohlzylindrische Bauteil (10) mindestens eine sich wenigstens abschnittsweise entlang der Längsachse (L) des hohlzylindrischen Bauteils (10) erstreckende und zumindest teilweise in der Zylinderwand (12) angeordnete Leitungsaufnahme (15) aufweist, und wobei
sich die mindestens eine Leitungsaufnahme (15) durch eine Stirnfläche (21) des hohlzylindrischen Bauteils (10) hindurch erstreckt,
**dadurch gekennzeichnet, dass**
das hohlzylindrische Bauteil (10) mehrere Leitungsaufnahmen (15, 16) aufweist, die im Bereich der Stirnfläche (21) voneinander weg gekrümmt sind.

2. Hohlzylindrisches Bauteil (10) nach Anspruch 1, **dadurch gekennzeichnet, dass** die mindestens eine Leitungsaufnahme (15) vom Aussenmantel (13) des hohlzylindrischen Bauteils (10) beabstandet angeordnet ist.

3. Hohlzylindrisches Bauteil (10) nach Anspruch 1 oder 2, **dadurch gekennzeichnet, dass** sich die mindestens eine Leitungsaufnahme (15) mindestens abschnittsweise zum inneren Hohlraum (11) hin öffnet.

4. Hohlzylindrisches Bauteil (10) nach einem der Ansprüche 1 bis 3, **dadurch gekennzeichnet, dass** sich die mindestens eine Leitungsaufnahme (15) im Bereich der Stirnfläche (21) vom inneren Hohlraum (11) weg krümmt.

5. Hohlzylindrisches Bauteil (10) nach einem der Ansprüche 1 bis 4, **dadurch gekennzeichnet, dass** das hohlzylindrische Bauteil (10) mehrere Leitungsaufnahmen (15, 16) aufweist, die wenigstens abschnittsweise parallel zueinander versetzt angeordnet sind.

6. Vorbau (20) für ein Fahrrad (30), mit einem hohlzylindrischen Bauteil (10) gemäss wenigstens einem der Ansprüche 1 bis 5.

7. Vorbau (20) nach Anspruch 6, **dadurch gekennzeichnet, dass** der Vorbau (20) eine Schaftaufnahme (25) zur klemmenden Aufnahme eines Gabelschaftes aufweist, wobei das hohlzylindrische Bauteil (10) zumindest einen Abschnitt der Schaftaufnahme (25) ausbildet und der innere Hohlraum (11) ausgebildet ist, zumindest einen Abschnitt des Gabelschaftes aufzunehmen.

8. Vorbau (20) nach Anspruch 7, **dadurch gekennzeichnet, dass** die Schaftaufnahme (25) ausgebildet ist, den Gabelschaft in einer Aufnahmerichtung aufzunehmen und sich die zumindest eine Leitungsaufnahme (15) wenigstens abschnittsweise entlang der Aufnahmerichtung erstreckt.

9. Vorbau (20) nach Anspruch 7 oder 8, **dadurch gekennzeichnet, dass** der Vorbau (20) einen Hohlraum (26) zur Aufnahme eines elektronischen Bauteils (29) aufweist, wobei die wenigstens eine Leitungsaufnahme (15) in den Hohlraum (26) mündet.

10. Vorbau (20) nach Anspruch 9, **dadurch gekennzeichnet, dass** der Vorbau (20) zwei Lenkerstutzen (22, 23) zur Verbindung mit Lenkergriffen für das Fahrrad aufweist, wobei zumindest einer der Lenkerstutzen (22, 23) mit zumindest einer wenigstens abschnittsweise innerhalb des Lenkerstutzens (22, 23) angeordneten Leitungsführung (27, 28) ausgebildet ist, und wobei die Leitungsführung (27, 28) in den Hohlraum (26) mündet.

11. Vorbau (20) nach Anspruch 10, **dadurch gekennzeichnet, dass** der Hohlraum (10) zumindest abschnittsweise zwischen der Mündung der mindestens einen Leitungsaufnahme (15) und der Mündung der zumindest einen Leitungsführung (27) angeordnet ist.

12. Vorbau (20) nach einem der Ansprüche 9 bis 11, **dadurch gekennzeichnet, dass** im Hohlraum (26) ein elektronisches Bauteil (29) angeordnet ist, wobei das elektronische Bauteil (29) eine Signalverteilungseinrichtung zur Verteilung von elektrischen Steuersignalen eines zumindest teilweise elektrisch betreibbaren und/oder antreibbaren Fahrrades ist.

13. Fahrrad (30), **gekennzeichnet durch**
ein hohlzylindrisches Bauteil (10) nach einem der Ansprüche 1 bis 5 und/oder
einen Vorbau (20) nach einem der Ansprüche 6 bis 12.

14. Fahrrad nach Anspruch 13, **dadurch gekennzeichnet, dass** das Fahrrad einen Fahrradrahmen (31) mit mindestens einem rohrförmigen Abschnitt aufweist, wobei das hohlzylindrische Bauteil (10) oder der Vorbau (20) wenigstens teilweise im rohrförmigen Abschnitt angeordnet ist oder diesen ausbildet.

## Claims

1. A hollow cylindrical component (10) for a bicycle (30), comprising a cylinder wall (12) which separates the inner cavity (11) of the hollow cylindrical component (10) from the surroundings of the hollow cylindrical component (10),
the hollow cylindrical component (10) having at least one line receptacle (15) which extends, at least in portions, along the longitudinal axis (L) of the hollow cylindrical component (10) and which is at least partially arranged in the cylinder wall (12), and
the at least one line receptacle (15) extending through an end face (21) of the hollow cylindrical component (10),
**characterized in that**
the hollow cylindrical component (10) has a plurality of line receptacles (15, 16) which are curved away from one another in the region of the end face (21).

2. The hollow cylindrical component (10) according to claim 1, **characterized in that** the at least one line receptacle (15) is spaced apart from the outer casing (13) of the hollow cylindrical component (10).

3. The hollow cylindrical component (10) according to claim 1 or 2, **characterized in that** the at least one line receptacle (15) is open, at least in portions, towards the inner cavity (11).

4. The hollow cylindrical component (10) according to any of claims 1 to 3, **characterized in that** the at least one line receptacle (15) curves away from the inner cavity (11) in the region of the end face (21).

5. The hollow cylindrical component (10) according to any of claims 1 to 4, **characterized in that** the hollow cylindrical component (10) has a plurality of line receptacles (15, 16) which are offset in parallel with one another, at least in portions.

6. A stem (20) for a bicycle (30), comprising a hollow cylindrical component (10) according to at least one of claims 1 to 5.

7. The stem (20) according to claim 6, **characterized in that** the stem (20) has a tube receptacle (25) for receiving a steerer tube in a clamping manner, the hollow cylindrical component (10) forming at least a portion of the tube receptacle (25) and the inner cavity (11) being adapted to receive at least a portion of the steerer tube.

8. The stem (20) according to claim 7, **characterized in that** the tube receptacle (25) is adapted to receive the steerer tube in a receiving direction and the at least one line receptacle (15) extends, at least in portions, along the receiving direction.

9. The stem (20) according to either claim 7 or claim 8, **characterized in that** the stem (20) has a cavity (26) for receiving an electronic component (29), the at least one line receptacle (15) opening into the cavity (26).

10. The stem (20) according to claim 9, **characterized in that** the stem (20) has two handlebar connecting pieces (22, 23) for connecting to handlebar grips for the bicycle, at least one of the handlebar connecting pieces (22, 23) being formed having at least one line guide (27, 28) which is arranged, at least in portions, inside the handlebar connecting piece (22, 23), and the line guide (27, 28) opening into the cavity (26).

11. The stem (20) according to claim 10, **characterized in that** the cavity (10) is arranged, at least in portions, between the opening of the at least one line receptacle (15) and the opening of the at least one line guide (27).

12. The stem (20) according to any of claims 9 to 11, **characterized in that** an electronic component (29) is arranged in the cavity (26), the electronic component (29) being a signal distribution device for distributing electrical control signals of an at least partially electrically operable and/or drivable bicycle.

13. A bicycle (30), **characterized by**
a hollow cylindrical component (10) according to any of claims 1 to 5 and/or
a stem (20) according to any of claims 6 to 12.

14. The bicycle according to claim 13, **characterized in that** the bicycle has a bicycle frame (31) having at least one tubular portion, the hollow cylindrical component (10) or the stem (20) being at least partially arranged in the tubular portion or forming same.

## Revendications

1. Composant cylindrique creux (10) pour une bicyclette (30), comportant une paroi de cylindre (12) séparant la cavité intérieure (11) du composant cylindrique creux (10) de l'environnement du composant cylindrique creux (10),
le composant cylindrique creux (10) présentant au moins un logement de câble (15) s'étendant au moins partiellement le long de l'axe longitudinal (L) du composant cylindrique creux (10) et disposé au moins partiellement dans la paroi de cylindre (12), et l'au moins un logement de câble (15) s'étendant à travers une face frontale (21) du composant cylindrique creux (10),
**caractérisé en ce que**
le composant cylindrique creux (10) présente une pluralité de logements de câble (15, 16) qui sont incurvés en s'écartant les uns des autres dans la zone de la face frontale (21).

2. Composant cylindrique creux (10) selon la revendication 1, **caractérisé en ce que** l'au moins un logement de câble (15) est disposé à distance de l'enveloppe extérieure (13) du composant cylindrique creux (10).

3. Composant cylindrique creux (10) selon la revendication 1 ou 2, **caractérisé en ce que** l'au moins un logement de câble (15) s'ouvre au moins partiellement sur la cavité intérieure (11).

4. Composant cylindrique creux (10) selon l'une des revendications 1 à 3, **caractérisé en ce que** l'au moins un logement de câble (15) s'incurve en s'écartant de la cavité intérieure (11) dans la zone de la face frontale (21).

5. Composant cylindrique creux (10) selon l'une des revendications 1 à 4, **caractérisé en ce que** le composant cylindrique creux (10) présente une pluralité de logements de câble (15, 16) au moins partiellement décalés parallèlement les uns aux autres.

6. Potence (20) pour une bicyclette (30), comportant un composant cylindrique creux (10) selon au moins l'une des revendications 1 à 5.

7. Potence (20) selon la revendication 6, **caractérisée en ce que** la potence (20) présente un logement de tige (25) destiné à recevoir par serrage une tige de fourche, le composant cylindrique creux (10) formant au moins une section du logement de tige (25) et la cavité intérieure (11) étant conçue pour recevoir au moins une section de la tige de fourche.

8. Potence (20) selon la revendication 7, **caractérisée en ce que** le logement de tige (25) est conçu pour recevoir la tige de fourche dans une direction de réception, et l'au moins un logement de câble (15) s'étend au moins partiellement le long de la direction de réception.

9. Potence (20) selon la revendication 7 ou 8, **caractérisée en ce que** la potence (20) présente une cavité (26) destinée à recevoir un composant électronique (29), l'au moins un logement de câble (15) débouchant dans la cavité (26).

10. Potence (20) selon la revendication 9, **caractérisée en ce que** la potence (20) présente deux tubulures de guidon (22, 23) destinées à être raccordées aux poignées de guidon de la bicyclette, au moins l'une des tubulures de guidon (22, 23) étant formé avec au moins un guide de câble (27, 28) disposé au moins partiellement à l'intérieur de la tubulure de guidon (22, 23), et le guide de câble (27, 28) débouchant dans la cavité (26).

11. Potence (20) selon la revendication 10, **caractérisée en ce que** la cavité (10) est disposée au moins partiellement entre l'embouchure de l'au moins un logement de câble (15) et l'embouchure de l'au moins un guide de câble (27).

12. Potence (20) selon l'une des revendications 9 à 11, **caractérisée en ce qu'**un composant électronique (29) est disposé dans la cavité (26), le composant électronique (29) étant un dispositif de distribution de signaux destiné à distribuer des signaux de commande électriques d'une bicyclette au moins partiellement à commande et/ou à entraînement électrique.

13. Bicyclette (30), **caractérisée par**
un composant cylindrique creux (10) selon l'une des revendications 1 à 5 et/ou une potence (20) selon l'une des revendications 6 à 12.

14. Bicyclette selon la revendication 13, **caractérisée en ce que** la bicyclette présente un cadre de bicyclette (31) comportant au moins une section tubulaire, le composant cylindrique creux (10) ou la potence (20) étant au moins partiellement disposé(e) dans la section tubulaire ou formant celle-ci.
